# EUROPÄISCHE PATENTANMELDUNG

(11) **EP 2 693 522 A1**
(43) Veröffentlichungstag der Anmeldung: **05.02.2014**
(21) Anmeldenummer: 12179206.3
(22) Anmeldetag: 03.08.2012
(51) Int. Cl.: H01M 2/10, H01M 10/50

(54) **Batteriemodul**

(71) Anmelder: Magna E-Car Systems GmbH & Co OG, 8041 Graz (AT)
(72) Erfinder: Roepke, Stefan, 8041 Graz (AT)
(74) Vertreter: Rausch, Gabriele

(57) **Zusammenfassung**

Die Erfindung betrifft ein Batteriemodul mit einer Anzahl von in Zellenmodulen (5) zusammengefassten Akkuzellen, wobei die Zellenmodule (5) auf einer Trägerplatte (1) angeordnet sind, von einem Gehäuse (14) umgeben sind und mittels eines in Kühlkanälen (3, 3', 4a, 4b) in einem geschlossenen Kühlkreislauf geführten Kühlmediums kühlbar sind, wobei die zur Zu- und Abfuhr des Kühlmediums vorgesehenen Kühlkanäle (3, 3', 4a, 4b) in der Trägerplatte (1) verlaufen, dadurch gekennzeichnet, dass die Trägerplatte (1) eine Wand der Gehäuses bildet und den einzigen Kühler des Batteriemoduls bildet.

## Beschreibung

Die Erfindung betrifft ein Batteriemodul mit einer Anzahl von in Zellenmodulen zusammengefassten Akkuzellen, wobei die Zellenmodule auf einer Trägerplatte angeordnet sind, von einem Gehäuse umgeben sind und mittels eines in Kühlkanälen in einem Kühlkreislauf geführten Kühlmediums kühlbar sind, wobei die Trägerplatte ein Teil des Gehäuses darstellt.

Aus der DE 10 2007 045 183 A1 ist ein Batteriemodul bestehend aus mehreren Zellenmodulen, die aus planaren Einzelzellen ausgebildet sind, bekannt, welche, jeweils zueinander beabstandet, in einem Gehäuse untergebracht sind, welches vollständig mit einem Kühlmedium gefüllt ist. Die Zellenmodule sind zum Kühlmedium durch eine jeweils jede planare Einzelzelle umhüllende Umschließung isoliert und geschützt. Das Kühlmedium wird in einem Kreislauf geführt, in welchem sich eine Kühleinrichtung für das Kühlmedium, beispielsweise ein Wärmetauscher, befindet. Aus der WO 2008/153328 A2 ist ein Batteriemodul aus einer Vielzahl von Einzelzellen bekannt, welche in einem Gehäuse untergebracht sind, das eine Einlass- und eine Auslassöffnung für ein Kühlmedium aufweist. Das Kühlmedium strömt innerhalb des Gehäuses senkrecht zur Steckrichtung der Akkuzellen. Das bei der Einlassöffnung einströmende Kühlmedium wird durch spezielle Ausformungen an der Innenseite des Gehäuses in die bevorzugte Strömungsrichtung unterstützend geleitet.

Aus der DE 1020011107075 ist ein Batteriemodul bekannt, das eine Trägerplatte mit integrierten Kühlleitungen aufweist, wobei zusätzliche Kühler in die in der Trägerplatte vorhandenen Kühlleitungen eingesteckt werden.

Dadurch wird der Aufbau des Kühlsystems zwar vereinfacht, aber es müssen viele Bauteile zur Kühlung verwendet werden.

Mit mehreren Zellenmodulen versehene, meist hochleistungsfähige elektrische Energiespeicher werden insbesondere in Hybridfahrzeugen und Elektrofahrzeugen benötigt. Beim Lade- und Entladevorgang solcher komplexer Batteriemodule entsteht Wärme, die abgeleitet werden muss, um die vorzeitige Alterung durch Temperaturspitzen sowie eine mögliche Zerstörung der Akkuzellen zu vermeiden. Es ist daher für die Batteriemodule eine leistungsfähige aber auch leichte und einfach anzuschließende Temperiereinrichtung erforderlich, die bei tiefen Temperaturen gegebenenfalls auch heizt.

Der Erfindung liegt die Aufgabe zugrunde, ein Batteriemodul der eingangs genannten Art derart auszuführen, dass der für die Kühlung der Akkuzellen erforderliche konstruktive Aufwand und das Gewicht des Batteriemoduls gering gehalten sind und eine einfache Handhabung erfolgen kann. Weiterhin ist es die Aufgabe Kühlkreislauf-Undichtigkeiten im Gehäuseinneren zu vermeiden, um so Kurzschlüssen vorzubeugen.

Gelöst wird die gestellte Aufgabe erfindungsgemäß dadurch, dass die zur Zu- und Abfuhr des Kühlmediums vorgesehenen Kühlkanäle in der Trägerplatte verlaufen, und die Trägerplatte ein Teil des Gehäuses ist, wobei die Trägerplatte die einzigen Kühler des Moduls darstellt.

Vorteilhafterweise sind die Kühlkanäle in die Trägerplatte integriert und damit "konstruktive Bestandteile" der Trägerplatte. Die hergestellte Trägerplatte beinhaltet daher schon die Kühlkanäle und stellt ein kompaktes Bauteil dar, das sowohl die Aufgaben des Tragens der Zellen als auch des Kühlens der Zellen und das Verschließen des Gehäuses verbindet.

Vorteilhafterweise wird durch die Anordnung der Ein- und Auslässe der Kühlkanäle die Handhabung vereinfacht, weil sie außerhalb des geschlossenen Gehäuses liegen. Gerade die Anschlüsse stellen Problempunkte dar. Dadurch dass sie nach außen gelegt werden, werden Leckagen innerhalb des Gehäuses vermieden und damit Kurzschlüsse unterbunden.

Eine vorteilhafte Ausführungsform verwendet Trägerplatten, die in einzelne Aussparungen der Bodenplatte des Gehäuses passen. Dadurch werden die Baugruppen handlicher und die Montage wird vereinfacht.

Durch Verwendung von Verbindungselementen ist die Montage der Trägerplatte im Gehäuse auf einfache Art und Weise möglich und reduziert den Montageaufwand. Dabei sind vorteilhafterweise Verbindungselemente vorgesehen, die eine überwiegend gasdichte Verbindung der Gehäuseteile ermöglichen.

Das Batteriemodul hat den Vorteil, dass alle Verbindungselemente sowie alle Ein-und Auslässe der Kühlleitungen außerhalb des Gehäuses des Batteriemoduls untergebracht sind und so ein getrennter Montageschritt für das Einbinden der Kühlung nach der Fertigstellung des geschlossenen Gehäuses ermöglicht.

### Beschreibung der Erfindung

Weitere Merkmale, Vorteile und Einzelheiten der Erfindung werden nun anhand der Zeichnung, die schematisch ein Ausführungsbeispiel darstellt, näher beschrieben. Dabei zeigen:

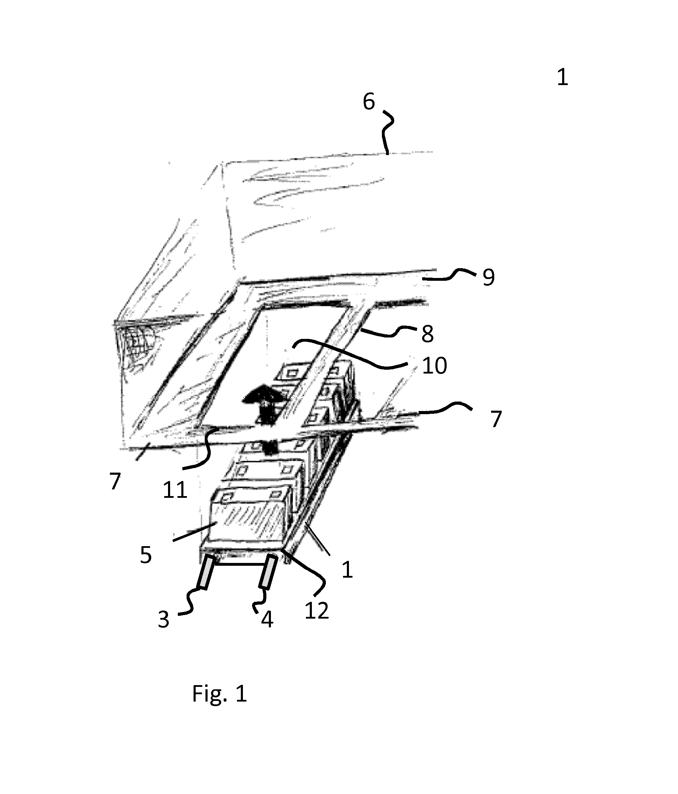

Fig. 1 eine Ansicht einer Ausführungsvariante eines erfindungsgemäßen Batteriemoduls,
Fig. 1a eine Ansicht eines Details des Batteriemoduls aus Fig. 1

Das in Fig. 1 gezeigte Batteriemodul weist mehrere auf einer rechteckigen Trägerplatte 1 fixierte Zellenmodule 5 auf, die jeweils aus einer Vielzahl von Akkuzellen bestehen.

Die Trägerplatte 1 weist eine geeignete Größe auf, um eine Reihe von den Zellmodulen 5 aufzunehmen. Die Zellmodule 5 werden dabei auf der Trägerplatte 1 in geeigneter Weise befestigt, zum Beispiel ist es möglich die Zellmodule 5 mit einem wärmeleitfähigen, aber elektrisch isolierenden Material auf der Trägerplatte 1 aufzubringen. Hier bieten sich industriell gebräuchliche Kleber an. In einer weiteren Ausgestaltung weist die Oberfläche der Trägerplatte 1 eine Struktur auf, die der Form der Zellmodule 5 angepasst ist.

Die Trägerplatte 1 ist als hohle Platte ausgebildet, in der Kühlleitungen untergebracht sind. Die Kühlleitungen enden an einer Seite der Trägerplatte 1 mit einem Einlass 3 und einem Auslass 4.

Ein Gehäuse 6 nimmt die Baueinheit, bestehend aus Trägerplatte 1 mit ihren auf ihr angeordneten Zellmodulen 5, auf. Das Gehäuse 6 weist Wände und eine Bodenplatte 7 auf, die mindestens eine Ausnehmung 10 besitzt. Die Ausnehmungen 10 sind so dimensioniert, dass sie die Baueinheit aus Trägerplatte 1 und Zellmodulen 5 aufnehmen können. Die Ausnehmungen 10 erstreckt sich entlang von Längsstreben 8 und Querstreben 9 des Gehäusebodens 7.

Zur Montage der Zellen im Gehäuse wird die Baugruppe bestehend aus

Trägerplatte 1 und Zellmodulen 5 von unten in die Ausnehmung 10 geschoben. Die Abmessungen der Trägerplatte 1 sind dabei so gewählt, dass die Baugruppe bis zur Oberfläche der Trägerplatte eingeschoben werden kann und die Trägerplatte 1 von unten mit dem Boden 7 des Gehäuses 6 verbunden wird. In einer weiteren vorteilhaften Ausführungsform, wird die Baugruppe mit der Trägerplatte 1 schräg in die Ausnehmung 10 eingeführt und eine innere Kante 11 des Gehäusebodens 7 mit dem Anschlag 12 der Trägerplatte verrastet. Dabei sind alle Verrastmöglichkeiten, die ein Fachmann für eine solche Verbindung vorsehen würde, möglich.

Eine Möglichkeit zur Verbindung wäre auch das Einpressen, in dem die Trägerplatte 1 so dimensioniert ist, dass sie mit geeignetem Druck in die Aussparung der Bodenplatte eingepresst werden kann.

Auch weitere Verbindungsmöglichkeiten wie Nieten Schrauben, Löten, Schweißen, Kleben sind dabei denkbar. Um die Gehäuseverbindungen möglichst gasdicht zu gestalten, ist es auch sinnvoll Flansche vorzusehen und gegebenenfalls auch noch eine Dichtung zwischen den Flanschen zu verwenden.

Bevor der Gehäusedeckel geschlossen wird müssen die einzelnen in die Ausnehmungen geschobenen Zellmodule 5 elektrisch miteinander verbunden werden, da im Normalfall viele Zellmodule zu einem Batteriemodul zusammengefasst werden..

Der Ein- und Auslass 3 ,4 der Kühlleitungen bleiben dabei unterhalb der Ebene des Gehäusebodens 7. Damit wird ein geschlossenes Gehäuse gebildet, wobei Anschlüsse für die Kühlleitungen außerhalb des geschlossenen Gehäuses bleiben und für die Handhabung der Anschlüsse und die Verbindung zu weiteren Modulen zur Verfügung stehen.

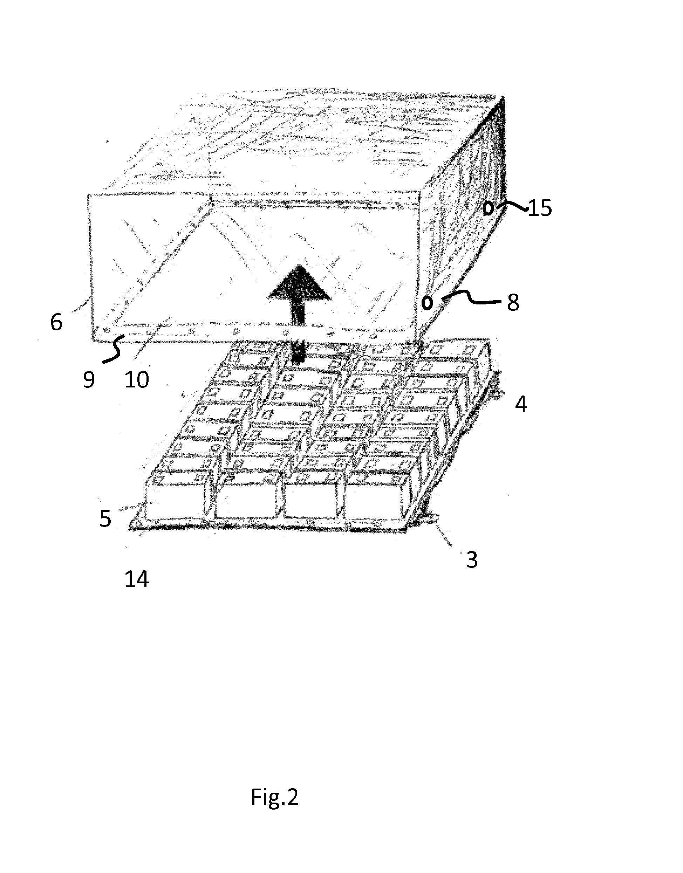

Figur 2 zeigt eine alternative Ausführungsform, in der mehrere Reihen von Zellmodulen 5 auf einer gemeinsamen Trägerplatte 1 angeordnet sind. Die somit größer dimensionierte Trägerplatte 1 zeigt einen umlaufenden Rand 14. Die Trägerplatte 1 wird von unten in Richtung des Pfeiles in das Gehäuse 6 eingeführt. Das Gehäuse 6 besitzt umlaufende Querstreben 9, die an dem umlaufenden Rand 14 der Trägerplatte 1 anliegen. Über angedeutete Schraubverbindungen lassen sich die beiden Baugruppen miteinander auf einfache Art und Weise verbinden. Der Kühlmittel- Einlass 3 sowie der Kühlmittel- Auslass 4 liegt wieder unterhalb der Ebene der Trägerplatte 1 und somit außerhalb des nach der Montage der Trägerplatte in das Gehäuse vorliegenden geschlossenen Gebildes.

In einer weiteren Ausführungsform enthält das Gehäuse wie in Figur 2 angedeutet, abdichtbare Öffnungen 15, durch die die Anschlüsse der Kühlkreislaufes nach außen geführt werden. Beim Zusammenbau des Gehäuses mit der bestückten Trägerplatte wird die Seite der Trägerplatte mit den Anschlüssen zunächst so schräg in das Gehäuse eingeführt, das die Kühlmittelanschlüsse durch die Öffnungen 15 durchgesteckt werden können. Danach wird die Trägerplatte 1 vollständig in das Gehäuse 6 eingeschoben. Mit den Öffnungen in einer Seitenwand des Gehäuses besteht die Möglichkeit die Trägerplatte tiefer in das Gehäuse einzuschieben, wenn das für die Verbindung oder für die Gestaltung des Gehäuses selbst notwendig wird.

Das Batteriemodul kann im Fahrzeug mittels eines Wärmetauschers an das vorhandene Klimagerät angebunden sein. Eine in den Kreislauf - zwischen Batteriemodul und Wärmetauscher - eingebundene Pumpe sorgt für den Transport des Kühlmediums im Kühlkreislauf.

Der Kühlkreislauf muss nicht unbedingt als geschlossener Kühlkreislauf ausgebildet sein. Die Ausgestaltung kann auch mit einer Luftkühlung funktionieren, bei der in Luft über die Ein und Auslässe geführt wird, die lediglich durch den Fahrtwind generiert wird.

Mit der vorgestellten Lösung lässt sich auch einen einzelne Batterie einkapseln und kühlen, die modulare Struktur, die als Beispiel gewählt wurde ist nur einen Ausführungsform.

Die Erfindung ist auf das dargestellte und beschriebene Ausführungsbeispiel nicht eingeschränkt. So ist es insbesondere möglich, die Trägerplatte derart auszuführen, dass die Zellenmodule einreihig oder in mehr als zwei Reihen positioniert werden. Die Anzahl und die Ausführung der Kühlkanäle wird entsprechend angepasst.

### BEZUGSZIFFERNLISTE

- 1: Trägerplatte
- 3: Einlassöffnung
- 4: Auslassöffnung
- 5: Zellmodul
- 6: Gehäuse
- 7: Gehäuseboden
- 8: Längsstrebe
- 9: Querstrebe
- 10: Ausschnitt
- 11: Innere Kante
- 12: Anschlag Trägerplatte
- 14: Rand der Trägerplatte
- 15: Öffnung

## Patentansprüche

1. Batteriemodul mit einer Anzahl von in Zellmodulen (5) zusammengefassten Akkuzellen, wobei die Zellmodule (5) auf einer Trägerplatte (1) angeordnet sind, von einem Gehäuse (6) umgeben sind und mittels eines in Kühlkanälen in einem Kühlkreislauf geführten Kühlmediums kühlbar sind, wobei die zur Zu- und Abfuhr des Kühlmediums vorgesehenen Kühlkanäle in der Trägerplatte (1) verlaufen, **dadurch gekennzeichnet, dass** die Trägerplatte (1) eine Wand des Gehäuses (6) bildet und den einzigen Kühler des Batteriemoduls darstellt.

2. Batteriemodul nach Anspruch 1, **dadurch gekennzeichnet, dass** die Kühlkanäle in Hohlräumen der Trägerplatte (1) integriert sind.

3. Batteriemodul nach Anspruch 1, **dadurch gekennzeichnet, dass** die Trägerplatte (1) Ein- und Auslässe (3,4) aufweist, die nach dem Zusammenbau des Gehäuses (6) außerhalb des geschlossenen Gehäuses (6) liegen.

4. Batteriemodul nach einem der Ansprüche 1 bis 3, **dadurch gekennzeichnet, dass** die Ein- und Auslässe (3,4,) durch Öffnungen des Gehäuses (6) geführt werden.

5. Batteriemodul nach einem der Ansprüche 1 bis 4, **dadurch gekennzeichnet**, die Trägerplatte (1) in die mindestens eine Aussparungen (10) des Gehäusebodens (7) passt.

6. Batteriemodul nach einem der Ansprüche 1 bis 5, **dadurch gekennzeichnet, dass** die Trägerplatte (1) über Verbindungselement (14, 12) mit dem Gehäuseboden (7) verbindbar ist.

7. Batteriemodul nach Anspruch 6, **dadurch gekennzeichnet, dass** die Verbindungselemente aus gegenüberliegenden Flächen (14, 9), Strukturen zur Herstellung eines Presssitzes, Flanschen. Schrauben, Nieten, Schweißnahten, Lötstellen, Klipsen bestehen.

8. Batteriemodul nach Anspruch 6, **dadurch gekennzeichnet, dass** die Verbindungselemente so angebracht sind, dass sie von außerhalb des Gehäuses in Verbindung zu bringen sind.

9. Batteriemodul nach Anspruch 6 **dadurch gekennzeichnet, dass** alle Anschlusselemente bestehend aus Ein- und Auslässen (3,4) und den Verbindungselementen außerhalb des Gehäuses (6) angebracht sind.

10. Batteriemodul nach Anspruch 1 **dadurch gekennzeichnet, dass** das Gehäuse eine zum überwiegenden Teil gasdichtes, geschlossenes Gehäuse bildet.

11. Batterie mit einer einer Trägerplatte (1), die von einem Gehäuse (6) umgeben ist und mittels eines in Kühlkanälen in einem Kühlkreislauf geführten Kühlmediums kühlbar sind, wobei die zur Zu- und Abfuhr des Kühlmediums vorgesehenen Kühlkanäle in der Trägerplatte (1) verlaufen, **dadurch gekennzeichnet, dass** die Trägerplatte (1) eine Wand des Gehäuses (6) bildet und den einzigen Kühler der Batterie darstellt.

12. Verfahren zur Montage mindestens eines Batteriemoduls nach Anspruch 1 in ein Gehäuse (6), wobei Zellmodule (5) auf der Trägerplatte thermisch verbunden aufgebracht werden und die Baueinheit aus Trägerplatte und Zellmodulen von unten gegen den Gehäuseboden (7) eingeführt wird und die Baueinheit mit den Verbindungsmitteln mit dem Gehäuseboden verbunden wird, und wobei die Kühlmittel-Anschlüsse (3,4) nach dem Verschließen des Gehäuses (6) von außen mit dem Kühlmittelkreislauf verbunden werden.
